# EUROPEAN PATENT APPLICATION

(11) **EP 2 199 297 A1**
(43) Date of publication of application: **23.06.2010**
(21) Application number: 08831371.3
(22) Date of filing: 16.09.2008
(51) Int. Cl.: C07F 17/00, C07F 5/02, C08F 4/6592, C08F 10/00, C08F 20/00, C07F 7/08, C07F 7/28

(54) **TRANSITION METAL ION COMPLEX, METHOD FOR PRODUCING THE SAME, AND METHOD FOR PRODUCING POLYMER**

(30) Priority: 18.09.2007 JP 2007240619
(71) Applicant: Sumitomo Chemical Company, Limited, Tokyo 104-8260 (JP)
(72) Inventor: SENDA, Taichi, Takatsuki-shi Osaka 569-1124 (JP); HANAOKA, Hidenori, Suita-shi Osaka 565-0874 (JP)
(74) Representative: Vossius & Partner
(86) International application number: PCT/JP2008/066648
(87) International publication number: WO 2009/038041

(57) **Abstract**

A transition metal ion complex represented by formula (1): 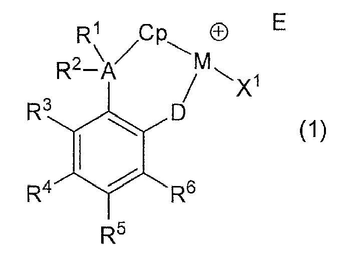 wherein M represents a group-IV element of the periodic table, A represents a group-XIV element of the periodic table, D represents a group-XVI element of the periodic table, Cp represents a group having a cyclopentadienyl type anion skeleton, E represents a counter anion, R¹-R⁶ represent a hydrogen atom, a halogen atom, an alkyl group, an aryl group, an aralkyl group, a silyl group substituted with a hydrocarbon, an alkoxy group, an aryloxy group, an aralkyl oxy group or an amino group substituted with hydrocarbon, and X¹ represents an alkyl group, an aryl group or an aralkyl group.

## Description

### Technical Field

The present invention relates to a transition metal ion complex and a method for producing the same, and a method for producing an olefin polymer and a method for producing a (meth)acrylate polymer.

### Background Art

A catalyst for polymerization of a (meth)acrylate using a group-IV transition metal complex has recently attracted attention (see, for example, Non-Patent Document 1). In the polymerization of a (meth)acrylate using the group-IV transition metal complex as a polymerization catalyst component, it has been reported that the molecular weight and stereoregularity of the poly(meth)acrylate to be produced can be controlled (see, for example, Non-Patent Document 2). Of these, it has been reported that living polymerization and syndiotactic polymerization of a methacrylate proceed when group-IV transition metal complex with enolate having a ligand in which cyclopentadiene and an amine are bridged by a group XIV element of the periodic table, is used (see, for example, Non-Patent Document 3).

On the other hand, a group-IV transition metal complex having a ligand in which cyclopentadiene and phenol are bridged by a group XIV element of the periodic table is known as a catalyst for olefin polymerization (see, for example, Patent Document 1). When the group-IV transition metal complex is used as an olefin polymerization catalyst, generally, an organic aluminum compound or an aluminoxane must be used as co-catalyst component.
Patent Document 1: JP 9-87313 A
Non-Patent Document 1: Organometallics 2007, 26, 187.
Non-Patent Document 2: J. Am. Chem. Soc. 2004, 126, 4897.
Non-Patent Document 3: Macromolecules 2004, 37, 3092.

### Disclosure of the Invention

### Problem to what the invention is to solve

In the circumstances, the present invention is intended to provide a novel transition metal ion complex that can be used as a polymerization catalyst for an olefin and a (meth)acrylate. Furthermore, the present invention is intended to provide a method for producing an olefin polymer and a method for producing a (meth)acrylate polymer using the transition metal ion complex as a polymerization catalyst.

### Means for solving the problem

The present inventors have conducted intensive studies with a view to solving the aforementioned problem. As a result, they found a transition metal ion complex capable of being used as a catalyst for olefin or a (meth)acrylate polymerization and reached at the present invention.

More specifically, the present invention provides a transition metal ion complex represented by formula (1): 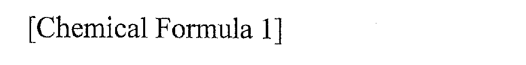 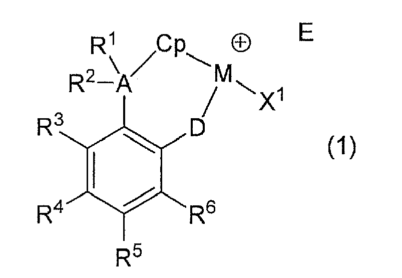 [in formula (1), M represents a group-IV element of the periodic table, A represents a group-XIV element of the periodic table, D represents a group-XVI element of the periodic table, Cp represents a group having a cyclopentadienyl type anion skeleton, E represents a counter anion, R¹, R², R³, R⁴, R⁵ and R⁶ are the same or different and represent a hydrogen atom, a halogen atom, an alkyl group having 1 to 20 carbon atoms, an aryl group having 6 to 20 carbon atoms, an aralkyl group having 7 to 20 carbon atoms, a silyl group substituted with a hydrocarbon having 1 to 20 carbon atoms, an alkoxy group having 1 to 20 carbon atoms, an aryloxy group having 6 to 20 carbon atoms, an aralkyloxy group having 7 to 20 carbon atoms or an amino group substituted with a hydrocarbon having 1 to 20 carbon atoms, where in R¹, R², R³, R⁴, R⁵ and R⁶, the alkyl group, aryl group, aralkyl group, alkoxy group, aryloxy group, aralkyloxy group or hydrocarbon may be substituted with a halogen atom, R¹ and R² may join to form a ring, R³ and R⁴, R⁴ and R⁵, and R⁵ and R⁶ each optionally join to form a ring, X¹ represents an alkyl group having 1 to 20 carbon atoms, an aryl group having 6 to 20 carbon atoms or an aralkyl group having 7 to 20 carbon atoms, where in X¹, the alkyl group, aryl group or aralkyl group may be substituted with a halogen atom].

According to the present invention, there is provided a method for producing a transition metal ion complex, comprising: contacting a transition metal complex represented by formula (2): 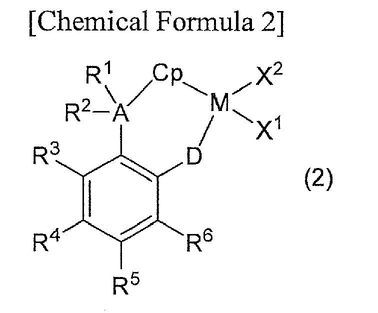 [in formula (2), M represents a group-IV element of the periodic table, A represents a group-XIV element of the periodic table, D represents a group-XVI element of the periodic table, Cp represents a group having a cyclopentadienyl type anion skeleton, R¹, R², R³, R⁴, R⁵ and R⁶ are the same or different and represent a hydrogen atom, a halogen atom, an alkyl group having 1 to 20 carbon atoms, an aryl group having 6 to 20 carbon atoms, an aralkyl group having 7 to 20 carbon atoms, a silyl group substituted with a hydrocarbon group having 1 to 20 carbon atoms, an alkoxy group having 1 to 20 carbon atoms, an aryloxy group having 6 to 20 carbon atoms, an aralkyloxy group having 7 to 20 carbon atoms or an amino group substituted with a hydrocarbon group having 1 to 20 carbon atoms, where in R¹, R², R³, R⁴, R⁵ and R⁶, the alkyl group, aryl group, aralkyl group, alkoxy group, aryloxy group, aralkyloxy group or hydrocarbon group may be substituted with a halogen atom, R¹ and R² may join to form a ring, R³ and R^{4,} R⁴ and R⁵_{,} and R⁵ and R⁶ each optionally join to form a ring, X¹ and X² represent an alkyl group having 1 to 20 carbon atoms, an aryl group having 6 to 20 carbon atoms and an aralkyl group having 7 to 20 carbon atoms where in X¹ and X², the alkyl group, aryl group or aralkyl group may be each substituted with a halogen atom],
with at least one boron compound selected from the group consisting of the compounds represented by formulas (B1), (B2) and (B3):

BQ¹Q²Q³ (B1)

G⁺BQ¹Q²Q³Q⁴r (B2)

(L¹-H)⁺(BQ¹Q²Q³Q⁴)⁻ (B3)

[in formulas (B1), (B2) and (B3), B represents a boron atom having a trivalent atomic value, Q¹, Q², Q³ and Q⁴ each independently represent a halogen atom, a hydrocarbon group, a halogenated hydrocarbon group, a substituted silyl group, .an alkoxy group or a disubstituted amino group, G⁺ represents an inorganic or organic cation and L¹ represents a neutral Lewis base].

Furthermore, the present invention is to provide a method for producing an olefin polymer, comprising: polymerizing an olefin in the presence of the transition metal ion complex according to the present invention.

Moreover, the present invention provides a method for producing a (meth)acrylate polymer, comprising: polymerizing a (meth)acrylate in the presence of the transition metal ion complex according to the present invention.

### Effect of the Invention

The transition metal ion complex obtained by the present invention is useful, for example, as a catalyst for a polymerization reaction of an olefin. Furthermore, a (meth)acrylate polymer can be produced by using the transition metal ion complex of the present invention as a catalyst.

### Best Modes for Carrying Out the Invention

The present invention will be more specifically described below.

In a transition metal ion complex represented by the above formula (1) (hereinafter, simply referred to as a transition metal ion complex (1)), examples of the group having a cyclopentadienyl type anion skeleton and represented by Cp include a substituted or unsubstituted cyclopentadienyl group and a substituted or unsubstituted indenyl group.

Specific examples of the group having a cyclopentadienyl type anion skeleton include a substituted or unsubstituted cyclopentadienyl group such as cyclopentadienyl, methylcyclopentadienyl, dimethylcyclopentadienyl, trimethylcyclopentadienyl, tetramethylcyclopentadienyl, ethylcyclopentadienyl, n-propylcyclopentadienyl, isopropylcyclopentadienyl, n-butylcyclopentadienyl, sec-butylcyclopentadienyl, tert-butylcyclopentadienyl, tetrahydroindenyl, octahydrofluorenyl, phenylcyclopentadienyl, trimethylsilylcyclopentadienyl and tert-butyldimethylsilylcyclopentadienyl; and a substituted or unsubstituted indenyl group such as indenyl, methylindenyl, dimethylindenyl, ethylindenyl, n-propylindenyl, isopropylindenyl, n-butylindenyl, sec-butylindenyl, tert-butylindenyl and phenylindenyl. Of these, cyclopentadienyl, methylcyclopentadienyl, dimethylcyclopentadienyl, trimethylcyclopentadienyl, tetramethylcyclopentadienyl and tert-butylcyclopentadienyl are preferable.

In the transition metal ion complex (1), examples of the group-XIV element of the periodic table represented by A include a carbon atom, a silicon atom and a germanium atom, and preferably include a carbon atom and a silicon atom.

In the transition metal ion complex (1), examples of the group-XVI element of the periodic table represented by D include an oxygen atom, a sulfur atom and a selenium atom, and preferably include an oxygen atom.

In the transition metal ion complex (1), examples of the group-IV element of the periodic table represented by M include a titanium atom, a zirconium atom and a hafnium atom, and preferably include a titanium atom.

In the substituents R¹ R², R³, R⁴, R⁵ and R⁶, examples of the halogen atom include a fluorine atom, a chlorine atom, a bromine atom and an iodine atom, and preferably include a chlorine atom.

In the substituents R¹ R², R³, R⁴, R⁵, R⁶, X¹ and X², specific examples of the alkyl group having 1 to 20 carbon atoms include methyl, ethyl, n-propyl, isopropyl, n-butyl, sec-butyl, tert-butyl, n-pentyl, neopentyl, amyl, n-hexyl, heptyl, n-octyl, n-nonyl, n-decyl, n-dodecyl, n-tridecyl, tetradecyl, pentadecyl, hexadecyl, heptadecyl, octadecyl, nonadecyl, and n-eicosyl. Of these methyl, ethyl, isopropyl, tert-butyl and amyl are preferable.

In the substituents R¹ R², R³, R⁴, R⁵, R⁶, X¹ and X², specific examples of the halogen-substituted alkyl group having 1 to 20 carbon atoms include these alkyl groups substituted with a halogen atom such as a fluorine atom, a chlorine atom, a bromine atom or an iodine atom.

In the substituents R¹ R², R³, R⁴, R⁵, R⁶, X¹ and X², specific examples of the aryl group having 6 to 20 carbon atoms include phenyl, 2-tolyl, 3-tolyl, 4-tolyl, 2,3-xylyl p, 2,4-xylyl, 2,5-xylyl, 2,6-xylyl, 3,4-xylyl, 3,5-xylyl, 2,3,4-trimethylphenyl, 2,3,5-trimethylphenyl, 2,3,6-trimethylphenyl, 2,4,6-trimethylphenyl, 3,4,5-trimethylphenyl, 2,3,4,5-tetramethylphenyl, 2,3,4,6-tetramethylphenyl, 2,3,5,6-tetramethylphenyl, pentamethylphenyl, ethylphenyl, n-propylphenyl, isopropylphenyl, n-butylphenyl, sec-butylphenyl, tert-butylphenyl, n-pentylphenyl, neopentylphenyl, n-hexylphenyl, n-octylphenyl, n-decylphenyl, n-dodecylphenyl, n-tetradecylphenyl, naphthyl and anthracenyl. Of these, phenyl is preferable.

In substituents R¹ R², R³, R⁴, R⁵, R⁶, X¹ and X², specific examples of the halogen-substituted aryl group having 6 to 20 carbon atoms include these aryl groups substituted with a halogen atom such as a fluorine atom, a chlorine atom, a bromine atom or an iodine atom.

In the substituents R¹, R², R³, R⁴, R⁵, R⁶, X¹ and X², specific examples of the aralkyl group having 7 to 20 carbon atoms include benzyl, (2-methylphenyl)methyl, (3-methylphenyl)methyl, (4-methylphenyl)methyl, (2,3-dimethylphenyl)methyl, (2,4-dimethylphenyl)methyl, (2,5-dimethylphenyl)methyl, (2,6-dimethylphenyl)methyl, (3,4-dimethylphenyl)methyl, (4,6-dimethylphenyl)methyl, (2,3,4-trimethylphenyl)methyl, (2,3,5-trimethylphenyl)methyl, (2,3,6-trimethylphenyl)methyl, (3,4,5-trimethylphenyl)methyl, (2,4,6-trimethylphenyl)methyl, (2,3,4,5-tetramethylphenyl)methyl, (2,3,4,6-tetramethylphenyl)methyl, (2,3,5,6-tetramethylphenyl)methyl, (pentamethylphenyl)methyl, (ethylphenyl)methyl, (n-propylphenyl)methyl, (isopropylphenyl)methyl, (n-butylphenyl)methyl, (sec-butylphenyl)methyl, (tert-butylphenyl)methyl, (n-pentylphenyl)methyl, (neopentylphenyl)methyl, (n-hexylphenyl)methyl, (n-octylphenyl)methyl, (n-decylphenyl)methyl, (n-decylphenyl)methyl, naphthylmethyl and anthracenylmethyl. Of these, benzyl is preferable.

In the substituents R¹, R², R³ R⁴, R⁵, R⁶, X¹ and X², specific examples of the halogen-substituted aralkyl group having 7 to 20 carbon atoms include these aralkyl groups substituted with an halogen atom such as a fluorine atom, a chlorine atom, a bromine atom or an iodine atom.

In the substituents R¹, R², R³, R⁴, R⁵ and R⁶, examples of a hydrocarbon of the silyl group substituted with a hydrocarbon include an alkyl group having 1 to 10 carbon atoms such as methyl, ethyl, n-propyl, isopropyl, n-butyl, sec-butyl, tert-butyl, isobutyl, n-pentyl, n-hexyl, cyclohexyl, n-heptyl, n-octyl, n-nonyl and n-decyl group; and an aryl group such as phenyl group. Specific examples of the silyl group substituted with a hydrocarbon having 1 to 20 carbon atoms include a silyl group with a single substituent having 1 to 20 carbon atoms such as methylsilyl, ethylsilyl and phenylsilyl; a disubstituted silyl group substituted with a hydrocarbon group having 1 to 20 carbon atoms such as dimethylsilyl, diethylsilyl and diphenylsilyl; and a trisubstituted silyl group substituted with a hydrocarbon group having 1 to 20 carbon atoms such as trimethylsilyl, triethylsilyl, tri-n-propylsilyl, triisopropylsilyl, tri-n-butylsilyl, tri-sec-butylsilyl, tri-tert-butylsilyl, tri-isobutylsilyl, tert-butyl-dimethylsilyl, tri-n-pentylsilyl, tri-n-hexylsilyl, tricyclohexylsilyl and triphenylsilyl. Of these, trimethylsilyl, tert-butyldimethylsilyl and triphenylsilyl are preferable.

The hydrocarbon group constituting these substituted silyl groups include, in addition to the hydrocarbon groups mentioned above, a hydrocarbon group substituted with a halogen atom such as a fluorine atom, a chlorine atom, a bromine atom or an iodine atom.

In the substituents R¹ R², R³, R⁴, R⁵ and R⁶, specific examples of the alkoxy group having 1 to 20 carbon atoms include methoxy, ethoxy, n-propoxy, isopropoxy, n-butoxy, sec-butoxy, tert-butoxy, n-pentyloxy, neopentyloxy, n-hexyloxy, n-octyloxy, n-nonyloxy, n-decyloxy, n-dodecyloxy, n-undecyloxy, n-dodecyloxy, tridecyloxy, tetradecyloxy, n-pentadecyloxy, hexadecyloxy, heptadecyloxy, octadecyloxy, nonadecyloxy and n-eicosyloxy. Of these, methoxy, ethoxy and tert-butoxy are preferable.

Specific examples of the halogen-substituted alkoxy group having 1 to 20 carbon atoms include these alkoxy groups substituted with a halogen atom such as a fluorine atom, a chlorine atom, a bromine atom or an iodine atom.

In the substituents R¹ R², R³, R⁴, R⁵ and R⁶, specific examples of the aryloxy group having 6 to 20 carbon atoms include phenoxy, 2-methylphenoxy, 3-methylphenoxy, 4-methylphenoxy, 2,3-dimethylphenoxy, 2,4-dimethylphenoxy, 2,5-dimethylphenoxy, 2,6-dimethylphenoxy, 3,4-dimethylphenoxy, 3,5-dimethylphenoxy, 2,3,4-trimethylphenoxy, 2,3,5-trimethylphenoxy, 2,3,6-trimethylphenoxy, 2,4,5-trimethylphenoxy, 2,4,6-trimethylphenoxy, 3,4,5-trimethylphenoxy, 2,3,4,5-tetramethylphenoxy, 2,3,4,6-tetramethylphenoxy, 2,3,5,6-tetramethylphenoxy, pentamethylphenoxy, ethylphenoxy, n-propylphenoxy, isopropylphenoxy, n-butylphenoxy, sec-butylphenoxy, tert-butylphenoxy, n-hexylphenoxy, n-octylphenoxy, n-decylphenoxy, n-tetradecylphenoxy, naphthoxy and anthracenoxy. Of these, phenoxy and naphthoxy are preferable.

Specific examples of the halogen-substituted aryloxy group having 6 to 20 carbon atoms include the aryloxy groups having 6 to 20 carbon atoms above substituted with a halogen atom such as a fluorine atom, a chlorine atom, a bromine atom or an iodine atom.

In the substituents R¹ R², R³, R⁴, R⁵ and R⁶, specific examples of the aralkyloxy group having 7 to 20 carbon atoms include benzyloxy, (2-methylphenyl)methoxy, (3-methylphenyl)methoxy, (4-methylphenyl)methoxy, (2,3-dimethylphenyl)methoxy, (2,4-dimethylphenyl)methoxy, (2,5-dirnethylphenyl)methoxy, (2,6-dimethylphenyl)methoxy, (3,4-dimethylphenyl)methoxy, (3,5-dimethylphenyl)methoxy, (2,3,4-trimethylphenyl)methoxy, (2,3,5-trimethylphenyl)methoxy, (2,3,6-trimethylphenyl)methoxy, (2,4,5-trimethylphenyl)methoxy, (2,4,6-trimethylphenyl)methoxy, (3,4,5-trimethylphenyl)methoxy, (2,3,4,5-tetramethylphenyl)methoxy, (2,3,4,6-tetramethylphenyl)methoxy, (2,3,5,6-tetramethylphenyl)methoxy, (pentamethylphenyl)methoxy, (ethylphenyl)methoxy, (n-propylphenyl)methoxy, (isopropylphenyl)methoxy, (n-butylphenyl)methoxy, (sec-butylphenyl)methoxy, (tert-butylphenyl)methoxy, (n-hexylphenyl)methoxy, (n-octylphenyl)methoxy, (n-decylphenyl)methoxy, naphthylmethoxy and anthracenylmethoxy. Of these, benzyloxy is preferable.

Specific examples of the halogen-substituted aralkyloxy group having 7 to 20 carbon atoms include these aralkyloxy groups substituted with a halogen atom such as a fluorine atom, a chlorine atom, a bromine atom or an iodine atom.

In the substituents R¹, R², R³, R⁴, R⁵ and R⁶, the amino group substituted with a hydrocarbon having 1 to 20 carbon atoms refers to amino group substituted with two hydrocarbon groups. Examples of the hydrocarbon herein include an alkyl group having 1 to 20 carbon atoms such as methyl, ethyl, n-propyl, isopropyl, n-butyl, sec-butyl, tert-butyl, isobutyl, n-pentyl, n-hexyl and cyclohexyl; and an aryl group such as phenyl group. These substituents may mutually join to form a ring. Examples of the amino group substituted with a hydrocarbon having 1 to 20 carbon atoms include dimethylamino, diethylamino, di-n-propylamino, diisopropylamino, di-n-butylamino, di-sec-butylamino, di-tert-butylamino, di-isobutylamino, tert-butylisopropylamino, di-n-hexylamino, di-n-octylamino, di-n-decylamino, diphenylamino, bistrimethylsilylamino, bis-tert-butyldimethylsilylamino, pyrrolyl, pyrrolidinyl, piperidinyl, carbazolyl, dihydroindolyl and dihydroisoindolyl. Of these, dimethylamino, diethylamino, pyrrolidinyl, piperidinyl and the like are preferable.

The hydrocarbon constituting these substituted amino groups, includes, in addition to the hydrocarbon above, hydrocarbon groups substituted with a halogen atom such as a fluorine atom, a chlorine atom, a bromine atom or an iodine atom.

R¹ and R² may join to form a ring. Of R³, R⁴, R⁵ and R⁶, two substituents having substitution sites next to each other may optionally join to form a ring.

Examples of the ring formed by joining R¹ and R² and the ring formed by joining two substituents of R³, R⁴, R⁵ and R⁶ having substitution sites next to each other include a saturated or unsaturated hydrocarbon ring substituted with a hydrocarbon having 1 to 20 carbon atoms. Specific examples thereof include a cyclopropane ring, a cyclobutane ring, a cyclopentane ring, a cyclohexane ring, a cycloheptane ring, a cyclooctane ring, a benzene ring, a naphthalene ring and an anthracene ring.

In the E, the counter anion refers to an anion that can stabilize a cation of a group-IV element of the periodic table represented by M. For example, a boron compound such as tris(pentafluorophenyl)methylborate and tetrakis(pentafluorophenyl)borate is mentioned.

Examples of the transition metal ion complex (1) of the present invention include [dimethylsilylene(2,3,4,5-tetramethylcyclopentadienyl)(2-phenoxy)met hyltitanium cation] [tris(pentafluorophenyl)methylborate], [dimethylsilylene(2,3,4,5-tetramethylcyclopentadienyl)(3,5-dimethyl-2-phenoxy)methyltitanium cation] [tris(pentafluorophenyl)methylborate], [dimethylsilylene(2,3,4,5-tetramethylcyclopentadienyl)(3-tert-butyl-2-p henoxy)methyltitanium cation] [tris(pentafluorophenyl)methylborate], [dimethylsilylene(2,3,4,5-tetramethylcyclopentadienyl)(3-tert-butyl-5-m ethyl-2-phenoxy)methyltitanium cation] [tris(pentafluorophenyl)methylborate], [dimethylsilylene(2,3,4,5-tetramethylcyclopentadienyl)(3-phenyl-2-phe noxy)methyltitanium cation] [tris(pentafluorophenyl)methylborate], [dimethylsilylene(2,3,4,5-tetramethylcyclopentadienyl)(3-tert-butyldime thylsilyl-5-methyl-2-phenoxy)methyltitanium cation] [tris(pentafluorophenyl)methylborate], [dimethylsilylene(2,3,4,5-tetramethylcyclopentadienyl)(3-trimethylsilyl-5-methyl-2-phenoxy)methyltitanium cation] [tris(pentafluorophenyl)methylborate], [dimethylsilylene(2,3,4,5-tetramethylcyclopentadienyl)(3-tert-butyl-5-m ethoxy-2-phenoxy)methyltitanium cation] [tris(pentafluorophenyl)methylborate], [dimethylsilylene (2,3,4,5-tetramethylcyclopentadienyl)(3-tert-butyl-5-chloro-2-phenoxy) methyltitanium cation] [tris(pentafluorophenyl)methylborate], [dimethylsilylene(cyclopentadienyl)(2-phenoxy)methyltitanium cation] [tris(pentafluorophenyl)methylborate], [dimethylsilylene(cyclopentadienyl)(3,5-dimethyl-2-phenoxy)methyltita nium cation] [tris(pentafluorophenyl)methylborate], [dimethylsilylene(cyclopentadienyl)(3-tert-butyl-2-phenoxy)methyltitan ium cation] [tris(pentafluorophenyl)methylborate], [dimethylsilylene(cyclopentadienyl)(3-tert-butyl-5-methyl-2-phenoxy) methyltitanium cation] [tris(pentafluorophenyl)methylborate], [dimethylsilylene(cyclopentadienyl)(3-phcnyl-2-phenoxy)methyltitaniu m cation] [tris(pentafluorophenyl)methylborate], [dimethylsilylene(cyclopentadienyl)(3-tert-butyldimethylsilyl-5-methyl-2-phenoxy)methyltitanium cation] [tris(pentafluorophenyl)methylborate], [dimethylsilylene(cyclopentadienyl)(3-trimethylsilyl-5-methyl-2-pheno xy)methyltitanium cation] [tris(pentafluorophenyl)methylborate], [dimethylsilylene(cyclopentadienyl)(3-tert-butyl-5-methoxy-2-phenoxy) methyltitanium cation] [tris(pentafluorophenyl)methylborate], [dimethylsilylene(cyclopentadienyl)(3-tert-butyl-5-chloro-2-phenoxy)m ethyltitanium cation] [tris(pentafluorophenyl)methylborate], [dimethylsilylene(indenyl)(2-phenoxy)methyltitanium cation] [tris(pentafluorophenyl)methylborate], [dimethylsilylene(indenyl)(3,5-dimethyl-2-phenoxy)methyltitanium cation][tris(pentafluorophenyl)methylborate], [dimethylsilylene (indenyl)(3-tert-butyl-2-phenoxy)methyltitanium cation] [tris(pentafluorophenyl)methylborate], [dimethylsilylene(indenyl)(3-tert-butyl-5-methyl-2-phenoxy)methyltitan ium cation] [tris(pentafluorophenyl)methylborate], [dimethylsilylene(indenyl)(3-phenyl-2-phenoxy)methyltitanium cation] [tris(pentafluorophenyl)methylborate], [dimethylsilylene(indenyl)(3-tert-butyldimethylsilyl-5-methyl-2-phenox y)methyltitanium cation][tris(pentafluorophenyl)methylborate], [dimethylsilylene(indenyl)(3-trimethylsilyl-5-methyl-2-phenoxy)methyl titanium cation] [tris(pentafluorophenyl)methylborate], [dimethylsilylene(indenyl)(3-tert-butyl-5-methoxy-2-phenoxy)methyltit anium cation] [tris(pentafluorophenyl)methylborate], [dimethylsilylene(indenyl)(3-tert-butyl-5-chloro-2-phenoxy)methyltitani um cation] [tris(pentafluorophenyl)methylborate], [dimethylsilylene(2,3,4,5-tetramethylcyclopentadienyl)(2-phenoxy)met hyltitanium cation] [tetrakis(pentafluorophenyl)borate], [dimethylsilylene(2,3,4,5-tetramethylcyclopentadienyl)(3,5-dimethyl-2-phenoxy)methyltitanium cation] [tetrakis(pentafluorophenyl)borate], [dimethylsilylene(2,3,4,5-tetramethylcyclopentadienyl)(3-tert-butyl-2-p henoxy)methyltitanium cation] [tetrakis(pentafluorophenyl)borate], [dimethylsilylene(2,3,4,5-tetramethylcyclopentadienyl)(3-tert-butyl-5-m ethyl-2-phenoxy)methyltitanium cation] [tetrakis(pentafluorophenyl)borate], [dimethylsilylene(2,3,4,5-tetramethylcyclopentadienyl)(3-phenyl-2-phe noxy)methyltitanium cation] [tetrakis(pentafluorophenyl)borate], [dimethylsilylene(2,3,4,5-tetramethylcyclopentadienyl)(3-tert-butyldime thylsilyl-5-methyl-2-phenoxy)methyltitanium cation] [tetrakis(pentafluorophenyl)borate], [dimethylsilylene(2,3,4,5-tetramethylcyclopentadienyl)(3-trimethylsilyl-5-methyl-2-phenoxy)methyltitanium cation] [tetrakis(pentafluorophenyl)borate], [dimethylsilylene(2,3,4,5-tetramethylcyclopentadienyl)(3-tert-butyl-5-m ethoxy-2-phenoxy)methyltitanium cation] [tetrakis(pentafluorophenyl)borate], [dimethylsilylene(2,3,4,5-tetramethylcyclopentadienyl)(3-tert-butyl-5-c hloro-2-phenoxy)methyltitanium cation] [tetrakis(pentafluorophenyl)borate], [dimethylsilylene(cyclopentadienyl)(2-phenoxy)methyltitanium cation] [tetrakis(pentafluorophenyl)borate], [dimethylsilylene(cyclopentadienyl)(3,5-dimethyl-2-phenoxy)methyltita nium cation] [tetrakis(pentafluorophenyl)borate], [dimethylsilylene(cyclopentadienyl)(3-tert-butyl-2-phenoxy)methyltitan ium cation] [tetrakis(pentafluorophenyl)borate], [dimethylsilylene(cyclopentadienyl)(3-tert-butyl-5-methyl-2-phenoxy) methyltitanium cation] [tetrakis(pentafluorophenyl)borate], [dimethylsilylene(cyclopentadienyl)(3-phenyl-2-phenoxy}methyltitaniu m cation] [tetrakis(pentafluorophenyl)borate], [dimethylsilylene(cyclopentadienyl)(3-tert-butyldimethylsilyl-5-methyl-2-phenoxy)methyltitanium cation] [tetrakis(pentafluorophenyl)borate], [dimethylsilylene(cyclopentadienyl)(3-trimethylsilyl-5-methyl-2-pheno xy)methyltitanium cation] [tetrakis(pentafluorophenyl)borate], [dimethylsilylenc(cyclopentadienyl)(3-tert-butyl-5-methoxy-2-phenoxy) methyltitanium cation] [tetrakis(pentafluorophenyl)borate], [dimethylsilylene(cyclopentadienyl)(3-tert-butyl-5-chloro-2-phenoxy)m ethyltitanium cation] [tetrakis(pentafluorophenyl)borate], [dimethylsilylene(indenyl)(2-phenoxy)methyltitanium cation] [tetrakis(pentafluorophenyl)borate], [dimethylsilylene(indenyl)(3,5-dimethyl-2-phenoxy)methyltitanium cation] [tetrakis(pentafluorophenyl)borate], [dimethylsilylene(indenyl)(3-tert-butyl-2-phenoxy)methyltitanium cation] [tetrakis(pentailuorophenyl)boratc], [dimethylsilylene(indenyl)(3-tert-butyl-5-methyl-2-phenoxy)methyltitan ium cation] [tetrakis(pentafluorophenyl)borate], [dimethylsilylene(indenyl)(3-phenyl-2-phenoxy)methyltitanium cation] [tetrakis(pentafluorophenyl)borate], [dimethylsilylene(indenyl)(3-tert-butyldimethylsilyl-5-methyl-2-phenox y)methyltitanium cation] [tetrakis(pentafluorophenyl)borate], [dimethylsilylene(indenyl)(3-trimethylsilyl-5-methyl-2-phenoxy)methyl titanium cation] [tetrakis(pentafluorophenyl)borate], [dimethylsilylene(indenyl)(3-tert-butyl-5-methoxy-2-phenoxy)methyltit anium cation] [tetrakis(pentafluorophenyl)borate] and [dimethylsilylene(indenyl)(3-tert-butyl-5-chloro-2-phenoxy)methyltitani um cation] [tetrakis(pentafluorophenyl)borate].

Furthermore, examples of the transition metal ion complex (1) also include a compound having diethylsilylene, diphenylsilylene, isopropylidene or diphenylmethylene in place of dimethylsilylene; a compound having methylcyclopentadienyl, 2,4-dimethylcyclopentadienyl, 3,4-dimethylcyclopentadienyl or 2,3,4-trimethylcyclopentadienyl in place of cyclopentadienyl; and a compound having zirconium or hafnium in place of titanium.

Examples of the transition metal ion complex (1), preferably, include
[dimethylsilylene(2,3,4,5-tetramethylcyclopentadienyl)(2-phenoxy)met hyltitanium cation] [tris(pentafluorophenyl)methylborate], [dimethylsilylene(2,3,4,5-tetramethylcyclopentadienyl)(2-phenoxy)met hyltitanium cation] [tctrakis(pentafluorophenyl)borate], [diethylsilylene(2,3,4,5-tetramethylcyclopentadienyl)(2-phenoxy)methy ltitanium cation] [tris(pentafluorophenyl)methylborate] and [diethylsilylene(2,3,4,5-tetramethylcyclopentadienyl)(2-phenoxy)methy ltitanium cation] [tetrakis(pentafluorophenyl)borate].

The transition metal ion complex (1) can be produced by contacting a transition metal complex represented by the above formula (2) (hereinafter, simply referred to as a transition metal complex (2)) with at least one compound selected from the group consisting of boron compounds represented by the above formulas (B1) to (B3) (hereinafter, simply referred to as compounds (B)).

Examples of the transition metal complex (2) include dimethylsilylene(2,3,4,5-tetramethyleyclopentadienyl)(2-phenoxy)dimet hyltitanium,
dimethylsilylene(2,3,4,5-tetramethylcyclopentadienyl)(3,5-dimethyl-2-p henoxy)dimethyltitanium,
dimethylsilylene(2,3,4,5-tetramethylcyclopentadienyl)(3-tert-butyl-2-ph enoxy)dimethyltitanium,
dimethylsilylene(2,3,4,5-tetramethylcyclopcntadienyl)(3-tert-butyl-5-m ethyl-2-phenoxy)dimethyltitanium,
dimethylsilylene(2,3,4,5-tetramethylcyclopentadienyl){3-phenyl-2-phen oxy)dimethyltitanium,
dimethylsilylene(2,3,4,5-tetramethylcyclopentadienyl)(3-tert-butyldimet hylsilyl-5-methyl-2-phenoxy)dimethyltitanium,
dimethylsilylene(2,3,4,5-tetramethylcyclopentadienyl)(3-trimethylsilyl-5-methyl-2-phenoxy)dimethyltitanium,
dimethylsilylene(2,3,4,5-tetramethylcyclopentadienyl)(3-tert-butyl-5-m ethoxy-2-phenoxy)dimethyltitanium,
dimethylsilylene(2,3,4,5-tetramethylcyclopentadienyl)(3-tert-butyl-S-ch loro-2-phenoxy)dimethyltitanium,
dimethylsilylene(cyclopentadienyl)(2-phenoxy)dimethyltitanium,
dimethylsilylene(cyclopentadienyl)(3,5-dimethyl-2-phenoxy)dimethyltit anium,
dimethylsilylene(cyclopentadienyl)(3-tert-butyl-2-phenoxy)dimethyltita nium,
dimethylsilylcne(cyclopentadicnyl)(3-tert-butyl-5-methyl-2-phenoxy)di methyltitanium,
dimethylsilylene(cyclopentadienyl)(3-phenyl-2-phenoxy)dimethyltitani um,
dimethylsilylene(cyclopentadienyl)(3-tert-butyldimethylsilyl-5-methyl-2-phenoxy)dimethyltitanium, dimethylsilylene(cyclopentadienyl)(3-tri methylsilyl-5-methyl-2-phenoxy)dimethyltitanium,
dimethylsilylene(cyclopentadienyl)(3-tert-butyl-5-methoxy-2-phenoxy) dimethyltitanium,
dimethylsilylene(cyclopentadienyl)(3-tert-butyl-5-chloro-2-phenoxy)di methyltitanium, dimethylsilylene(indenyl)(2-phenoxy)dimethyltitanium, dimethylsilylene(indenyl)(3,5-dimethyl-2-phenoxy)dimethyltitanium,
dimethylsilylene(indenyl)(3-tert-butyl-2-phenoxy)dimethyltitanium,
dimethylsilylene(indenyl)(3-tert-butyl-5-methyl-2-phenoxy)dimethyltita nium, dimethylsilylene(indenyl)(3-phenyl-2-phenoxy)dimethyltitanium, dimethylsilylene(indenyl)(3-tert-butyldimethylsilyl-5-methyl-2-phenox y)dimethyltitanium,
dimethylsilylene(indenyl)(3-trimethylsilyl-5-methyl-2-phenoxy)dimeth yltitanium,
dimethylsilylene(indenyl)(3-tert-butyl-5-methoxy-2-phenoxy)dimethylti tanium, and
dimethylsilylene(indenyl)(3-tert-butyl-5-chloro-2-phenoxy)dimethyltita nium.

Furthermore, examples of the transition metal complex (2) also include a compound having diethylsilylene, diphenylsilylene, isopropylidene or diphenylmethylene in place of dimethylsilylene; a compound having methylcyclopentadienyl, 2,4-dimethylcyclopentadienyl, 3,4-dimethylcyclopentadienyl or 2,3,4-trimethylcyclopentadienyl in place of cyclopentadienyl; a compound having diphenyltitanium or dibenzyltitanium in place of dimethyltitanium and a compound having zirconium or hafnium in place of titanium.

In the method of reacting a transition metal complex (2) with a compound (B), the reaction is generally conducted by adding the transition metal ion complex (2) to a solvent, and thereafter, adding the compound (B).

The use amount of compound (B) is generally the range of 0.5 to 5 mole, and preferably 0.7 to 1.5 mole, per mole of a transition metal complex (2).

The reaction temperature is generally from -100°C to the boiling point of a solvent, and preferably within the range of-80°C to 60°C.

A reaction is generally conducted in an inactive solvent to the reaction. Examples of the solvent include aprotic solvents including an aromatic hydrocarbon solvent such as benzene and toluene; an aliphatic hydrocarbon solvent such as hexane and heptane; an ether solvent such as diethyl ether, tetrahydrofuran and 1,4-dioxane; and a halogen solvent such as dichloromethane, dichloroethane, chloro benzene and dichlorobenzene. The solvents are used singly or as a mixture of two or more kinds. The use amount thereof is generally 1 to 200 parts by weight, and preferably 3 to 50 parts by weight, per part of a transition metal complex (2).

After completion of the reaction, a desired transition metal ion complex (1) can be obtained from the resultant reaction mixture by a general method, for example, a method filtering the generated precipitate, concentrating the filtrate to allow the transition metal ion complex (1) to precipitate and obtaining the precipitate by filtration.

The transition metal complex (2) can be obtained, for example, by the reaction between a known dihalogenated titanium complex (see for example, Patent Document 1) and an alkyl lithium compound or alkyl magnesium compound in accordance with a known technique.

The compound (B) used in the production of the transition metal ion complex (1) is at least one boron compound selected from the group consisting of the compounds represented by the following formulas (B1)to(B3).

(B1): Boron compound represented by BQ¹Q²Q³

(B2): Boron compound represented by G⁺(BQ¹Q²Q³Q⁴)⁻

(B3): Boron compound represented by (L¹-H)⁺(BQ¹Q²Q³Q⁴)⁻

(in formulas, B represents a boron atom having a trivalent atomic value, Q¹, Q², Q³ and Q⁴ each independently represent a halogen atom, a hydrocarbon group, a halogenated hydrocarbon group, a substituted silyl group, an alkoxy group or a disubstituted amino group, G⁺ represents an inorganic or organic cation and L¹ represents a neutral Lewis base.)

In a boron compound represented by the above formula (B1), B represents a boron atom having a trivalent atomic value. Q¹ to Q³ are preferably each independently a halogen atom, a hydrocarbon group having 1 to 20 carbon atoms, a halogenated hydrocarbon group having 1 to 20 carbon atoms, a substituted silyl group having 1 to 20 carbon atoms, an alkoxy group having 1 to 20 carbon atoms or a disubstituted amino group having 2 to 20 carbon atoms, and more preferably, a halogen atom, a hydrocarbon group having 1 to 20 carbon atoms or halogenated hydrocarbon group having 1 to 20 carbon atoms.

Examples of the boron compound represented by formula (B1) include tris(pentafluorophenyl)borane, tris(2,3,5,6-tetrafluorophenyl)borane, tris(2,3,4,5-tetrafluorophenyl)borane, tris(3,4,5-trifluorophenyl)borane, tris(2,3,4-trifluorophenyl)borane, and phenylbis(pentafluorophenyl)borane, and preferably include tris(pentafluorophenyl)borane.

In the boron compound represented by formula (B2) above, G⁺ is an inorganic or organic cation, B is a boron atom having a trivalent atomic value and Q¹ to Q⁴ are the same as defined in Q¹ to Q³ in the above (B1).

In the boron compound represented by formula (B2), examples of G⁺ being an inorganic cation include a ferrocenium cation, an alkyl-substituted ferrocenium cation and a silver cation. Examples of G⁺ being an organic cation include a triphenylmethyl cation. Furthermore, examples of (BQ¹Q²Q³Q⁴)⁻ include tetrakis(pentafluorophenyl)borate,
tetrakis(2,3,5,6-tetrafluorophenyl)borate,
tetrakis(2,3,4,5-tetrafluorophenyl)borate,
tetrakis(3,4,5-trifluorophenyl)borate,
tetrakis(2,2,4-trifluorophenyl)borate,
phenylbis(pentafluorophenyl)borate and tetrakis(3,5-bistrifluoromethylphenyl)borate.

Examples of the boron compound represented by formula (B2) include ferroceniumtetrakis(pentafluorophenyl)borate, 1,1'-dimethylferroceniumtetrakis(pentafluorophenyl)borate, silver tetrakis(pentafluorophenyl)borate,
triphenylmethyltetrakis(pentafluorophenyl)borate and triphenylmethyltetrakis(3,5-bistrifluoramethylphenyl)borate; and preferably, triphenylmethyltetrakis(pentafluorophenyl)borate.

In the boron compound represented by formula (B3) above, L¹ is a neutral Lewis base, (L¹-H)⁺ is Broensted acid, B represents a boron atom having a trivalent atomic value, and Q¹ to Q⁴ are the same as defined in Q¹ to Q³ in the above (B1).

In the boron compound represented by formula (B3), examples of (L¹-H)⁺ include trialkyl-substituted ammonium, N,N-dialkylanilinium, dialkylammonium and triarylphosphonium, and examples of (BQ¹Q²Q³Q⁴)⁻ are the same as mentioned above.

Examples of the boron compound represented by formula (B3) include triethylammoniumtetrakis(pentafluorophenyl)borate, tripropylammoniumtetrakis(pentafluorophenyl)borate,
tri(n-butyl)ammoniumtetrakis(pentafluorophenyl)borate,
tri(n-butyl)ammoniumtctrakis(3,5-bistrifluoromethylphenyl)borate,
N,N-dimethylaniliniumtetrakis(pentafluorophenyl)borate, N,N-diethyl aniliniumtetrakis(pentafluorophenyl)borate,
N,N-2,4,6-pentamethylaniliniumtetrakis(pentafluorophenyl)borate,
N,N-dimethylaniliniumtetrakis(3,5-bistrifluoromethylphenyl)borate,
diisopropylammoniumtetrakis(pentafluorophenyl)borate,
dicyclohexylammoniumtetrakis(pentafluorophenyl)borate,
triphenylphosphoniumtetrakis(pentafluorophenyl)borate,
tri(methylphenyl)phosphoniumtetrakis(pentafluorophenyl)borate and tri(dimethylphenyl)phosphoniumtetrakis(pentafluorophenyl)borate; and preferably include tri(n-butyl)ammoniumtetrakis(pentafluorophenyl)borate or
N,N-dimethylaniliniumtetrakis(pentafluorophenyl)borate.

As the compound (B), generally, any one of a boron compound represented by the above formula (B1), a boron compound represented by the above formula (B2) and a boron compound represented by the above formula (B3) is used or a mixture of two or more optional boron compounds represented by formula (B1), (B2) or (B3).

The transition metal ion complex (1) can be singly used as an olefin polymerization catalyst without contacting with other co-catalyst components.

The transition metal ion complex (1) can be singly used as a (meth)acrylate polymerization catalyst without contacting with other co-catalyst components.

### [Method for producing olefin polymer]

In the method for producing an olefin polymer of the present invention, an olefin is polymerized in the presence of a transition metal ion complex (1).

As the olefin to be used for polymerization, a linear olefin and a cyclic olefin, etc. can be used. Homopolymerization may be performed by using one olefin, or copolymerization may be performed by using not less than two kinds of olefins. Generally, as the olefin, an olefin having 2 to 20 carbon atoms is used.

Specific examples of the olefin to be used include α-olefin having 3 to 20 carbon atoms such as ethylene, propylene, 1-butene, 1-pentene, 1-hexene, 1-heptene, 1-octene, 1-nonene, 1-decene, 3-methyl-1-pentene, 4-methyl-1-pentene, 3,3-dimethyl-1-butene, 5-methyl-1-hexene and 3,3-dimethyl-1-pentene; a non-conjugated diene such as 1,5-hexadiene, 1,4-hexadiene, 1,4-pentadiene, 1,5-heptadiene, 1,6-heptadiene, 1,6-oetadiene, 1,7-octadiene, 1,7-nonadiene, 1,8-nonadiene, 1,8-decadiene, 1,9-decadiene, 1,12-tetradecadiene, 1,13-tetradecadiene, 4-methyl-1,4-hexadiene, 5-methyl-1,4-hexadiene, 7-methyl-1,6-octadiene, 3 -methyl-1, 4-hexadiene, 3-methyl-1,5-hexadiene, 3-ethyl-1,4-hexadiene, 3-ethyl-1,5-hexadiene, 3,3-dimethyl-1,4-hexadiene and 3,3-dimethyl-1,5-hexadiene; a conjugated diene such as 1,3-butadiene, isoprene, 1,3-hexadiene and 1,3-octadiene; a monoolefin such as vinylcyclopentane, vinylcyclohexane, vinylcycloheptane, norbornene, 5-methyl-2-norbomene, 5-ethyl-2-norbomene, 5-butyl-2-norbomene, tetracyclododecene, tricyclodecene, tricycloundecene, pentacyclopentadecene, pentacyclohexadecene, 8-methyltetracyclododecene and 8-ethyltetra cyclododecene; a non-conjugated diene such as 5-ethylidene-2-norbornene, dicyclopentadiene, 5-vinyl-2-norbornene, norbomadiene, 5-methylene-2-norbornene, 1,5-cyclooctadiene, 7-methyl-2,5-norbornadiene, 7-ethyl-2,5-norbornadiene, 7-propyl-2,5-norbomadiene, 7-butyl-2,5-norbornadiene, 7-pentyl-2,5-norbornadiene, 7-hexyl-2,5-norbornadiene, 7,7-dimethyl-2,5-norbornadiene, 7,7-methylethyl-2,5-norbornadiene, 7-chloro-2,5-norbornadiene, 7-bromo-2,5-norbornadiene, 7-fluoro-2,5-norbornadiene, 7,7-dichloro-2,5-norbornadiene, 1-methyl-2,5-norbornadiene, 1-ethyl-2,5-norbornadiene, 1-propyl-2,5-norbornadiene, 1-butyl-2,5-norbornadiene, 1-chloro-2,5-norbornadiene, 1-bromo-2,5-norbornadiene, 5,8-endomethylenehexahydronaphthalene and vinylcyclohexene; a conjugated diene such as 1,3-cyclooctadiene and 1,3-cyclohexadiene; and a styrene compound such as styrene, o-methylstyrene, m-methylstyrene, p-methylstyrene, o, p-dimethylstyrene, o-ethylstyrene, m-ethylstyrene, p-ethylstyrene, α-methylstyrene and divinylbenzene.

Examples of a combination of olefins for use in copolymerization of olefins include a combination of linear olefin/linear olefin such as ethylene/propylene, ethylene/1-butene, ethylene/1-hexene, ethylene/propylene/1-butene, ethylene/propylene/1-hexene, propylene/1-butene and propylene/1-hexene; and a combination of linear olefin/cyclic olefin such as ethylene/vinylcyclohexane, ethylene/norbornene, ethylene/tetracyclododecene, ethylene/5-ethylidene-2-norbornene, propylene/vinylcyclohexane, propylene/norbornene, propylene/tetracyclododecene, propylene/5-ethylidene-2-norbornene and ethylene/propylene/5-ethylidene-2-norbornene.

Although a method for initiating polymerization is not particularly limited, examples of the method include a method for initiating polymerization by adding an olefin to a solution of a transition metal ion complex (1), a method for initiating polymerization by adding an olefin to a solution in which a transition metal complex (2) has been allowed to be in contact with a compound (B) in advance, or, a method for initiating polymerization by adding a transition metal complex (2) to a solution in which a compound (B) has been allowed to be in contact with an olefin.

The use amount of each of the catalyst components, more specifically, the molar ratio of compound (B)/a transition metal complex (2) is generally 0.1 to 100, preferably 0.5 to 10, and more preferably 0.8 to 2.

As the concentration of each of the catalyst components when they are used in the state of solution, the concentration of a transition metal complex (2) is generally 0.0001 to 5 mmol/L and preferably 0.001 to 1 mmol/L, and the concentration of a compound (B) is generally 0.0001 to 5 mmol/L, and preferably, 0.001 to 1 mmol/L.

Although a polymerization method is not particularly limited, examples of the polymerization method include solvent polymerization or slurry polymerization using an aliphatic hydrocarbon (butane, pentane, hexane, heptane, octane, etc.), an aromatic hydrocarbon (benzene, toluene, etc.), an ether (diethylether, tetrahydrofuran, 1,4-dioxane, etc.) or a halogenated hydrocarbon (dichloromethane, dichloroethane, etc.) as a solvent and gas-phase polymerization performed in a gaseous monomer. Polymerization can be performed in either a continuous process or a batch process.

The polymerization temperature may fall within the range of -50°C to 300°C, and particularly preferably within the range of -20°C to 250°C. The polymerization pressure is preferably normal pressure to 90 MPa. The polymerization time, which is appropriately determined depending upon the kind of desired polymer and a reaction apparatus, generally falls within the range of 1 minute to 20 hours. Furthermore, a chain transfer agent such as hydrogen can be added to control the molecular weight of a polymer.

### [Method for producing (meth)acrylate polymer]

In the method for producing a (meth)acrylate polymer of the present invention, a (meth)acrylate is polymerized in the presence of a transition metal ion complex (1).

Examples of the (meth)acrylate compound to be used in polymerization include a methacrylate compound such as methyl methacrylate, ethyl methacrylate, isopropyl methacrylate, n-butyl methacrylate, tert-butyl methacrylate, cyclohexyl methacrylate, isobutyl methacrylate, benzyl methacrylate, allyl methacrylate and isobornyl methacrylate; and an acrylate compound such as methyl acrylate, ethyl acrylate, isopropyl acrylate, n-butyl acrylate and tert-butyl acrylate.

Although these (meth)acrylate compounds can be homopolymerized, not less than two kinds of (meth)acrylate compounds can be copolymerized. Although a method for copolymerizing not less than two kinds of (meth)acrylate compounds is not particularly limited, examples of the method include a method in which polymerization is initiated in the conditions where not less than two kinds of (meth)acrylates are simultaneously present to obtain a random copolymer; and a method of obtaining a block copolymer by polymerizing a first (meth)acrylate in advance, and then, adding a second (meth)acrylate and the following (meth)acrylates.

Although a method for initiating polymerization is not particularly limited, examples of the method include a method of initiating polymerization by adding a (meth)acrylate to a solution of a transition metal ion complex (1), a method of initiating polymerization by adding a (meth)acrylate to a solution in which a transition metal complex (2) has been allowed to be in contact with a compound (B) or a method of initiating polymerization by adding a transition metal complex (2) to a solution in which a compound (B) has been allowed to be in contact with a (meth)acrylate.

The use amount of each of the catalyst components, more specifically, the molar ratio of compound (B)/a transition metal complex (2) is generally 0.1 to 100, preferably 0.5 to 10, and more preferably 0.8 to 2.

As the concentration of each of the catalyst components when they are used in the state of solution, the concentration of a transition metal complex (2) is generally 0.0001 to 5 mmol/L and preferably 0.001 to 1 mmol/L, and the concentration of a compound (B) is generally 0.0001 to 5 mmol/L and preferably 0.001 to 1 mmol/L.

Although a polymerization method is not particularly limited, examples of the method include solvent polymerization or slurry polymerization using an aliphatic hydrocarbon (butane, pentane, hexane, heptane, octane, etc.), an aromatic hydrocarbon (benzene, toluene, etc.), an ether (diethyl ether, tetrahydrofuran, 1,4-dioxane, etc.), or a halogenated hydrocarbon (dichloromethane, dichloroethane, etc.) as a solvent. Polymerization can be performed in either a continuous process or a batch process.

The polymerization temperature may fall within the range of -80°C to 150°C, and particularly preferably within the range of -30°C to 100°C. The polymerization time is appropriately determined depending upon the kind of desired polymer and the reaction apparatus, for example, falls within the range of 1 second to 24 hours.

A polymerization reaction is preferably performed under an atmosphere of an inert gas such as nitrogen and argon. It is important to sufficiently dry an inert gas and a (meth)acrylate monomer and not to contain water in order to efficiently obtain a highly polymerized polymer.

The (meth)acrylate polymer obtained contains a metal catalyst component. When a degree of polymerization thereof is high, the content of the metal catalyst component thereof is low. In this case, the metal catalyst component may not be removed. When the metal catalyst component must be removed, the (meth)acrylate polymer is washed with water and diluted hydrochloric acid, etc. After the metal catalyst component is removed in this manner, dehydration is performed to obtain the (meth)acrylate polymer.

The obtained (meth)acrylate polymer can be used as a film, a fiber, a foamed sheet and various kinds of moldings. Furthermore, the (meth)acrylate copolymer obtained can be used as an additive to another polymer.

### Examples

The present invention will be more specifically described by way of experimental examples, below; however, the present invention is not limited to these experimental examples.

<Production of transition metal ion complex>

### Physical properties were measured by the following method.

(1) Measurement conditions of proton nuclear magnetic resonance spectroscopy (¹H-NMR)
Apparatus: EX270 manufactured by JEOL Ltd. or DPX-300 manufactured by Bruker.
Sample cell: 5 mmφ tube
Measurement solvent: toluene-d₈
Sample concentration: 10 mg/0.5 mL (toluene-d₈)
Measurement temperature: room temperature (about 25°C)
Measurement parameter: 5 mmφ probe, MENUF, NON, OBNUC, ¹H, cumulated number: 16 times
Pulse angle: 45 degree
Repeat time: ACQTM 3 seconds, PD 4 seconds
Internal standard: toluene-d₈ (2.09 ppm)

### [Experimental Example 1]

### Synthesis of [dimethylsilylene(2,3,4,5-tetramethylcyclopentadienyl) (3-tert-butyl-5-methyl-2-phenoxy)methyltitanium cation] [tris(pentafluorophenyl)methylborate] (hereinafter referred to as transition metal ion complex (A))

Under nitrogen, dimethylsilylene(2,3,4,5-tetramethylcyclopentadienyl)(3-tert-butyl-5-m ethyl-2-phenoxy)dimethyltitanium (hereinafter, referred to as titanium complex (a)) (12.6 mg, 0.03 mmol) and tris(pentafluorophenyl)borane (15.4 mg, 0.03 mmol) were mixed in toluene-d₈ (0.6 mL) used as a solvent. After the mixture was stirred at room temperature for one hour, ¹H-NMR of the obtained transition metal ion complex (A) was measured and the structure of the complex was confirmed.
¹H-NMR (toluene-d₈, δ ppm)): 0.22 (s, 3H, SiMe₂), 0.30 (s, 3H, SiMe₂), 0.75 (br s, 3H, B-Me), 1.22 (s, 3H, Ti-Me), 1.27 (s, 9H, Ar-tBu), 1.31 (s, 3H, C₅Me₄), 1.50 (s, 3H, C₅Me₄), 1.72 (s, 6H, C₅Me₄), 2.15 (s, 3H, Ar-Me), 6.97 (s, 1H, Ar-H), 7.05 (s, 1H, Ar-H)

### [Experimental Example 2]

### Synthesis of [diethylsilylene(2,3,4,5-tetramethylcyclopentadienyl)(3-tert-butyl-5-met hyl-2-phenoxy)methyltitanium cation] [tris(pentafluorophenyl)methylborate] (hereinafter, referred to as transition metal ion complex (B))

Under nitrogen, diethylsilylenc(2,3,4,5-tetramethylcyclopentadienyl)(3-tert-butyl-5-met hyl-2-phenoxy)dimethyltitanium (hereinafter, referred to as titanium complex (b)) (13.4 mg, 0.03 mmol) and tris(pentafluorophenyl)borane (15.4 mg, 0.03 mmol) were mixed in toluene-d₈ (0.6 mL) used as a solvent. After the mixture was stirred at room temperature for one hour, ¹H-NMR of the obtained transition metal ion complex (B) was measured and the structure of the complex was confirmed.
¹H-NMR (toluene-d₈, δ ppm)): 0.68-0.95 (m, 10H, SiEt₂), 0.76 (br s, 3H, B-Me), 1.20 (s, 3H, Ti-Me), 1.29 (s, 9H, Ar-tBu), 1.32 (s, 3H, C₅Me₄), 1.52 (s, 3H, C₅Me₄), 1.70 (s, 3H, C₅Me₄), 1.77 (s, 3H, C₅Me₄), 2.15 (s, 3H, Ar-Me), 6.97 (s, 1H, Ar-H), 7.07 (s, 1H, Ar-H)

### [Experimental Example 3]

### Synthesis of [dimethylsilylene(2,3,4,5-tetramethylcyclopentadienyl)(3-tert-butyl-5-m ethyl-2-phenoxy)methyltitanium cation] [tetrakis(pentafluorophenyl)borate] (hereinafter, referred to as transition metal ion complex (C))

Under nitrogen, titanium complex (a) (16.7 mg, 0.04 mmol) and triphenylmethyltetrakis(pentafluorophenyl)borate (36.9 mg, 0.04 mmol) were mixed in toluene-d₈ (0.8 mL) used as a solvent. After the mixture was stirred at room temperature for one hour, transition metal ion complex (C) was obtained as insoluble dark brown oil. As a soluble component in toluene-d₈, 1,1,1-triphenylethane was observed, suggesting that transition metal ion complex (C) was produced.

### [Experimental Example 4]

### [Synthesis transition metal ion complex (C)]

Under nitrogen, titanium complex (a) (16.7 mg, 0.04 mmol) and N,N-dimethylaniliniumtetrakis(pentafluorophenyl)borate (32.0 mg, 0.04 mmol) were mixed in toluene-d₈ (0.8 mL) used as a solvent. After the mixture was stirred at room temperature for one hour, transition metal ion complex (C) was obtained as insoluble dark brown oil.

### [Experimental Example 5]

### [Synthesis of transition metal ion complex (A)]

Under nitrogen, titanium complex (a) (209.3 mg, 0.50 mmol) and tris(pentafluorophenyl)borane (256.0 mg, 0.50 mmol) were mixed in toluene (10.5 mL) used as a solvent. After the mixture was stirred for one hour at room temperature, the solvent was removed under reduced pressure. After pentane was added, transition metal ion complex (A) was obtained by filtration as orange solids (249.1 mg, yield 53.5%).
¹H-NMR (toluene-d₈, δ ppm)): 0.22 (s, 3H, SiMe₂), 0.30 (s, 3H, SiMe₂), 0.75 (br s, 3H, B-Me), 1.22 (s, 3H, Ti-Me), 1.27 (s, 9H, Ar-tBu), 1.31 (s, 3H, C₅Me₄), 1.50 (s, 3H, C₅Me₄), 1.72 (s, 6H, C₅Me₄), 2.15 (s, 3H, Ar-Me), 6.97 (s, 1H, Ar-H), 7.05 (s, 1H, Ar-H)

<Method for producing olefin polymer>

The weight average molecular weight (Mw) in terms of polystyrene and molecular weight distribution (Mw/Mn) of olefin polymer were measured by gel permeation chromatography (GPC) in the following conditions.
Apparatus: HLC-8120GPC(RI)
Column: TSKgel, GMH HR-M
Flow rate: 0.5 mL/min
Measurement temperature: 40°C
Mobile phase: THF
Standard substance: polystyrene

### [Experimental Example 6]

### (Polymerization of ethylene)

Under nitrogen, triphenylmethyltetrakis(pentafluorophenyl)borate (184.5 mg, 0.20 mmol) and titanium complex (a) (83.7 mg, 0.20 mmol) were stirred at room temperature in toluene (5 mL) for 10 minutes. To this mixture, toluene (95 mL) was added and the mixture was injected to an autoclave. To the mixture, ethylene was introduced so as to obtain 0.2 MPa and polymerization was initiated and continued at 30°C. Polymerization was conducted for 10 minutes and methanol (15 mL) was added to terminate polymerization. After a methanol solution with hydrochloric acid (5 wt%) (25 mL) and methanol (500 mL) were added and stirred for one hour, a polymer was obtained by filtration. Vacuum dry was performed (at 80°C, until a constant weight was obtained) to obtain polyethylene (6.32 g) as white solids.

### [Experimental Example 7]

### (Polymerization of propylene)

Under nitrogen, at room temperature, triphenylmethyltetrakis(pentafluorophenyl)borate (184.5 mg, 0.20 mmol) and titanium complex (a) (83.7 mg, 0.20 mmol) were stirred in toluene (5 mL) for 10 minutes to obtain a catalyst solution. Under nitrogen, toluene (90 mL) was added to an autoclave and propylene was introduced at 0°C so as to obtain 0.2 MPa and stabilized. To this mixture, the catalyst solution was injected to initiate polymerization. While the autoclave was cooled on an ice bath, polymerization was continued for one hour. Methanol (15 mL) was added to terminate polymerization. After a methanol solution with hydrochloric acid (5 wt%) (25 mL) and methanol (500 mL) were added and stirred for one hour, a polymer was obtained by filtration. Vacuum dry was performed (at 80°C, until a constant weight was obtained) to obtain a polypropylene (28.18 g) in a rubber state.

### [Experimental Example 8]

### (Polymerization of 1-hexene)

Under nitrogen, transition metal ion complex (A) (46.5 mg, 0.05 mmol) was stirred at room temperature in toluene (9 mL) for 10 minutes. To this mixture, 1-hexene (0.83 g, 9.89 mmol) was added at one time to initiate polymerization. Polymerization was performed at room temperature for 3 hours and a methanol solution with hydrochloric acid (5 wt%) (4.5 mL) was added to terminate polymerization. After methanol (136 mL) was added and stirred for one hour, the supernatant was removed to obtain a polymer. The obtained polymer was subjected to vacuum dry (80°C, 3 hours) to obtain poly(1-hexene) (0.61 g, yield 73.1%) as sticky oil. The obtained poly(1-hexene) had Mw = 12,200 and Mw/Mn = 1.76.

### [Experimental Example 9]

### (Polymerization of 1-hexene)

Under nitrogen, triphenylmethyltetrakis(pentafluorophenyl)borate (46.1 mg, 0.05 mmol) and titanium complex (a) (20.9 mg, 0.05 mmol) were stirred at room temperature in toluene (5 mL) for 10 minutes. To this mixture, 1-hexene (0.85 g, 10.08 mmol) was added at one time to initiate polymerization. Polymerization was performed at room temperature for 3 hours and a methanol solution with hydrochloric acid (5 wt%) (2.4 mL) was added to terminate polymerization. After methanol (73 mL) was added and stirred for one hour, the supernatant was removed to obtain a polymer. The obtained polymer was subjected to vacuum dry (80°C, 3 hours) to obtain poly(1-hexene) (0.78 g, yield 91.9%) as sticky oil. The obtained poly(1-hexene) had Mw = 14,900 and Mw/Mn = 1.81.

### [Experimental Example 10]

### (Polymerization of 1-hexene)

Under nitrogen, tris(pentafluorophenyl)borane (25.6 mg, 0.05 mmol) and titanium complex (a) (20.9 mg, 0.05 mmol) were stirred at room temperature in toluene (9 mL) for 10 minutes. To this mixture, 1-hexene (0.85 g, 10.13 mmol) was added at one time to initiate polymerization. Polymerization was performed at room temperature for 3 hours, a methanol solution with hydrochloric acid (5 wt%) (4.5 mL) was added to terminate polymerization. After methanol (135.7 mL) was added and stirred for one hour, the supernatant was removed to obtain a polymer. The polymer obtained was subjected to vacuum dry (80°C, 3 hour) to obtain poly(1-hexene) (0.58 g, yield 68.4%) as sticky oil. The obtained poly(1-hexene) had Mw = 14,600 and Mw/Mn = 1.86.

### [Experimental Example 11]

### (Polymerization of 1-hexene)

Under nitrogen, triphenylmethyltetrakis(pentafluorophenyl)borate (46.1 mg, 0.05 mmol) and titanium complex (b) (22.3 mg, 0.05 mmol) were stirred at room temperature in toluene (9 mL) for 10 minutes. To this mixture, 1-hexene (1.69 g, 20.04 mmol) was added at one time to initiate polymerization. Polymerization was performed at room temperature for one hour, a methanol solution with hydrochloric acid (5 wt%) (4.6 mL) was added to terminate polymerization. After methanol (137 mL) was added and stirred for one hour, the supernatant was removed to obtain a polymer. The obtained polymer was subjected to vacuum dry (80°C, 3 hours) to obtain poly(1-hexene) (1.63 g, yield 96.6%) as sticky oil. The obtained poly(1-hexene)had Mw = 24,500 and Mw/Mn = 1.90.

### [Experimental Example 12]

### (Polymerization of 1-hexene)

Under nitrogen, triphenylmethyltetrakis(pentafluorophenyl)borate (46.1 mg, 0.05 mmol) and dimethylmethylene(cyclopentadienyl)(3-tert-butyl-5-methyl-2-phenoxy) dimethyltitanium (17.3 mg, 0.05 mmol) were stirred at room temperature in toluene (9 mL) for 5 minutes. To this mixture, 1-hexene (0.84 g, 9.99 mmol) was added at one time to initiate polymerization. Polymerization was performed at room temperature for 6 hours and a methanol solution with hydrochloric acid (5 wt%) (4.6 mL) was added to terminate polymerization. After methanol (136 mL) was added and stirred for one hour, the supernatant was removed to obtain a polymer. The polymer obtained was subjected to vacuum dry (80°C, 3 hours) to obtain poly(1-hexene) (0.75 g, yield 88.6%) as sticky oil. The obtained poly(1-hexene) had Mw = 3,710 and Mw/Mn = 1.59.

### [Experimental Example 13]

### (Polymerization of 1-octene)

Under nitrogen, triphenylmethyltetrakis(pentafluorophenyl)borate (46.1 mg, 0.05 mmol) and titanium complex (b) (22.3 mg, 0.05 mmol) were stirred at room temperature in toluene (9 mL) for 10 minutes. To this mixture, 1-octene (2.25 g, 20.01 mmol) was added at one time to initiate polymerization. Polymerization was performed at room temperature for one hour and a methanol solution with hydrochloric acid (5 wt%) (4.6 mL) was added to terminate polymerization. After methanol (137 mL) was added and stirred for one hour, the supernatant was removed to obtain a polymer. The obtained polymerwas subjected to vacuum dry (80°C, 3 hours) to obtain poly(1-octene) (2.23 g, yield 99.5%) as sticky oil. The obtained poly(1-octene) had Mw = 30,500 and Mw/Mn = 1.95.

### [Experimental Example 14]

### (Polymerization of styrene)

Under nitrogen, triphenylmethyltetrakis(pentafluorophenyl)borate (46.1 mg, 0.05 mmol) and titanium complex (a) (20.9 mg, 0.05 mmol) were stirred at room temperature in toluene (9 mL) for 10 minutes. To this mixture, styrene (1.04 g, 9.94 mmol) was added at one time to initiate polymerization. Polymerization was performed at room temperature for 10 minutes and a methanol solution with hydrochloric acid (5 wt%) (4.5 mL) was added to terminate polymerization. After methanol (135 mL) was added and stirred for one hour, the supernatant was removed to obtain a polymer. The polymer obtained was subjected to vacuum dry (80°C, 3 hours) to obtain polystyrene (0.79 g, yield 76.3%) as light yellow solids. The obtained polystyrene had Mw = 6,500 and Mw/Mn = 3.77.

### [Experimental Example 15]

### (Copolymerization of 1-hexene/styrene)

Under nitrogen, triphenylmethyltetrakis(pentafluorophenyl)borate (46.1 mg, 0.05 mmol) and titanium complex (a) (20.9 mg, 0.05 mmol) were stirred at room temperature in toluene (9 mL) for 10 minutes. To this mixture, styrene (1.06 g, 10.19 mmol) and 1-hexene (0.84 g, 10.01 mmol) were added at one time to initiate polymerization. Polymerization was performed at room temperature for 10 minutes and a methanol solution with hydrochloric acid (5 wt%) (4.5 mL) was added to terminate polymerization. At the time when polymerization was terminated, the conversion rate of 1-hexene was 91% and the conversion rate of styrene was 99%. After methanol (136 mL) was added and stirred for one hour, the supernatant was removed to obtain a polymer. The obtained polymer was subjected to vacuum dry (80°C, 3 hours) to obtain a 1-hexene/styrene copolymer (1.16 g, yield 60.9%) as light yellow solids. The obtained polymer had Mw = 3,450 and Mw/Mn = 2.19.

### [Experimental Example 16]

### (Polymerization of norbornene)

Under nitrogen, triphenylmethyltetrakis(pentafluorophenyl)borate (46.1 mg, 0.05 mmol), titanium complex (a) (20.9 mg, 0.05 mmol) were stirred at room temperature in toluene (6 mL) for 10 minutes. To this mixture, a toluene solution (3 mL) of norbornene (0.94 g, 10.04 mmol) was added at one time to initiate polymerization. Polymerization was performed at room temperature for 30 minutes and a methanol solution with hydrochloric acid (5 wt%) (4.6 mL) was added to terminate polymerization. After methanol (137 mL) was added and stirred for one hour, the supernatant was removed to obtain a polymer. The obtained polymer was subjected to vacuum dry (80°C, 3 hours) to obtain polynorbornene (14.3 mg, yield 1.5%) as light yellow solids. The obtained polynorbornene had Mw = 1,610 and Mw/Mn = 1.54.

### [Experimental Example 17]

### (Polymerization of 1-hexene/norbornene)

Under nitrogen, triphenylmethyltetrakis(pentafluorophenyl)borate (46.1 mg, 0.05 mmol) and titanium complex (a) (20.9 mg, 0.05 mmol) were stirred at room temperature in toluene (6 mL) for 10 minutes. To this mixture, a toluene solution (3 mL) of norbornene (0.94 g, 10.02 mmol) and 1-hexene (0.86 g, 10.19 mmol) were added at one time to initiate polymerization. Polymerization was performed at room temperature for 30 minutes and a methanol solution with hydrochloric acid (5 wt%) (4.5 mL) was added to terminate polymerization. At the time when polymerization was terminated, the conversion rate of 1-hexene was 61% and the conversion rate of norbornene was 35%. After methanol (136 mL) was added and stirred for one hour, the supernatant was removed to obtain a polymer. The obtained polymer was subjected to vacuum dry (80°C, 3 hours) to obtain a 1-hexene/norbornene copolymer (0.23 g, yield 12.7%) as yellow solids. The obtained polymer had Mw - 3,400 and Mw/Mn = 1.75.

<Method for producing acrylate polymer>

The weight average molecular weight (Mw) in terms of polystyrene and molecular weight distribution (Mw/Mn) of acrylate polymer were measured by gel permeation chromatography (GPC) in the following conditions.
Apparatus: HLC-8120GPC(RI)
Column: TSKgel, GMH HR-M
Flow rate: 0.5 mL/min
Measurement temperature: 40°C
Mobile phase: THF
Standard substance: polystyrene

Measurement of stereoregularity (rr/mr/mm) was performed by ¹H-NMR in accordance with a known document (for example, Organometallics 2007, 26, 187-195) under the following conditions.
Apparatus: EX270 manufactured by JEOL Ltd. or DPX-300
manufactured by Bruker
Sample cell: 5 mmφ tube
Measurement solvent: CDCl₃
Sample concentration: 30 mg/0.5 mL (CDCl₃)
Measurement temperature: room temperature (about 25°C)
Measurement parameter: 5 mmφ probe, MENU NON, OBNUC ¹H, Cumulated number: 16 times
Pulse angle: 45 degree
Repeat time: ACQTM 3 seconds, PD 4 seconds
Internal standard: CDCl₃ (7.26 ppm)

### [Experimental Example 18]

### (Polymerization of methyl methacrylate)

Under nitrogen, transition metal ion complex (A) (46.5 mg, 0.05 mmol) was stirred at room temperature in toluene (9 mL) for 10 minutes. To this mixture, methyl methacrylate (1.01 g, 10.06 mmol) was added at one time to initiate polymerization. Polymerization was performed at room temperature for 6 hours and a methanol solution with hydrochloric acid (5 wt%) (4.6 mL) was added to terminate polymerization. After methanol (137 mL) was added and stirred for one hour, a polymer was obtained by filtration. The obtained polymer was subjected to vacuum dry (80°C, 3 hours) to obtain a poly(methyl methacrylate) (0.92 g, yield 91.0%) as white solids. The obtained poly(methyl methacrylate) had Mw = 18,100, Mw/Mn = 1.12 and stereoregularity rr/mr/mm = 68.1/29.2/2.7.

### [Experimental Example 19]

### (Polymerization of methyl methacrylate)

Under nitrogen, tris(pentafluorophenyl)borane (15.4 mg, 0.03 mmol) and titanium complex (a) (12.6 mg, 0.03 mmol) were stirred at room temperature in toluene (6 mL) for 10 minutes. To this mixture, methyl methacrylate (1.18 g, 11.79 mmol) was added at one time to initiate polymerization. Polymerization was performed at room temperature for 6 hours, a methanol solution with hydrochloric acid (5 wt%) (6.0 mL) was added to terminate polymerization. After methanol (120 mL) was added and stirred for one hour, a polymer was obtained by filtration. The obtained polymer was subjected to vacuum dry (80°C, 3 hours) to obtain a poly(methyl methacrylate) (0.89 g, yield 75.4%) as white solids. The obtained poly(methyl methacrylate) had Mw - 54,800, Mw/Mn = 1.13 and stereoregularity rr/mr/mm = 70.9/27.6/1.5.

### [Experimental Example 20]

### (Polymerization of methyl methacrylate)

Under nitrogen, triphenylmethyltetrakis(pentafluorophenyl)borate (46.1 mg, 0.05 mmol) and titanium complex (a) (20.9 mg, 0.05 mmol) were stirred at room temperature in toluene (11 mL) for 10 minutes and raised in temperature to 40°C. To this mixture, methyl methacrylate (0.99 g, 9.89 mmol) was added at one time to initiate polymerization. Polymerization was performed at 40°C for 3 hours, a methanol solution with hydrochloric acid (5 wt%) (5.4 mL) was added to terminate polymerization. After methanol (163 mL) was added and stirred for one hour, a polymer was obtained by filtration. The obtained polymer was subjected to vacuum dry (80°C, 3 hours) to obtain poly(methyl methacrylate) (0.93 g, yield 93.5%) as white solids. The obtained poly(methyl methacrylate) had Mw = 18,700, Mw/Mn = 1.12, and stereoregularity rr/mr/mm = 67.9128.9/3.2.

### [Experimental Example 21]

### (Polymerization of methyl methacrylate)

Under nitrogen, N,N-dimethylaniliniumtetrakis(pentafluorophenyl)borate (40.1 mg, 0.05 mmol) and titanium complex (a) (20.9 mg, 0.05 mmol) were stirred at room temperature in toluene (11 mL) for 10 minutes and temperature was raised to 40°C. To this mixture, methyl methacrylate (0.99 g, 9.89 mmol) was added at one time to initiate polymerization. Polymerization was performed at 40°C for 3 hours and a methanol solution with hydrochloric acid (5 wt%) (5.4 mL) was added to terminate polymerization. After methanol (162 mL) was added and stirred for one hour, a polymer was obtained by filtration. The obtained polymer was subjected to vacuum dry (80°C, 3 hours) to obtain a poly(methyl methacrylate) (0.88 g, yield 89.3%) as white solids. The obtained poly(methyl methacrylate) had Mw = 17,900, Mw/Mn = 1.14 and stereoregularity rr/mr/mm = 68.3/28.5/3.2.

### [Experimental Example 22]

### (Polymerization of methyl methacrylate)

Under nitrogen, tris(pentafluorophenyl)borane (25.6 mg, 0.05 mmol) and dimethylsilylene(2,3,4,5-tetramethylcyclopentadienyl)(3-tert-butyl-5-m ethyl-2-phenoxy)dibenzyltitanium (28.5 mg, 0.05 mmol) were stirred at room temperature in toluene (9 mL) for 10 minutes. To this mixture, methyl methacrylate (1.01 g, 10.08 mmol) was added at one time to initiate polymerization. Polymerization was performed at room temperature for 6 hours, a methanol solution with hydrochloric acid (5 wt%) (4.6 mL) was added to terminate polymerization. After methanol (137 mL) was added and stirred for one hour, a polymer was obtained by filtration. The obtained polymer was subjected to vacuum dry (80°C, 3 hours) to obtain a poly(methyl methacrylate) (0.85g, yield 84.1%) as light yellow solids. The obtained poly(methyl methacrylate) had Mw = 36,700, Mw/Mn = 1.30 and stereoregularity rr/mr/mm = 68.4/28.8/2.8.

### [Experimental Example 23]

### (Polymerization of methyl methacrylate)

Under nitrogen, tris(pentafluorophenyl)borane (25.6 mg, 0.05 mmol) and dicthylsilylene(2,3,4,5-tetramethylcyclopentadienyl)(3-tert-butyl-5-met hyl-2-phenoxy)dibenzyltitanium (29.9 mg, 0.05 mmol) were stirred at room temperature in toluene (9 mL) for 10 minutes. To this mixture, methyl methacrylate (1.01 g, 10.09 mmol) was added at one time to initiate polymerization. Polymerization was performed at room temperature for 6 hours, a methanol solution with hydrochloric acid (5 wt%) (4.6 mL) was added to terminate polymerization. After methanol (137 mL) was added and stirred for one hour, a polymer was obtained by filtration. The obtained polymer was subjected to vacuum dry (80°C, 3 hours) to obtain a poly(methyl methacrylate) (0.89 g, yield 88.4%) as light yellow solids. The obtained poly(methyl methacrylate) had Mw = 41,000, Mw/Mn = 1.33, stereoregularity rr/mr/mm = 71.2/26.7/2.1.

### [Experimental Example 24]

### (Polymerization of cyclohexyl methacrylate)

Under nitrogen, triphenylmethyltetrakis(pentafluorophenyl)borate (46.1 mg, 0.05 mmol) and titanium complex (a) (20.9 mg, 0.05 mmol) were stirred at room temperature in toluene (9 mL) for 10 minutes. To this mixture, cyclohexyl methacrylate (1.68 g, 9.99 mmol) was added at one time to initiate polymerization. Polymerization was performed at room temperature for 6 hours, a methanol solution with hydrochloric acid (5 wt%) (4.6 mL) was added to terminate polymerization. After methanol (137 mL) was added and stirred for one hour, a polymer was obtained by filtration. The obtained polymer was subjected to vacuum dry (80°C, 3 hours) to obtain a poly(cyclohexyl methacrylate) (1.49 g, yield 88.4%) as light yellow solids. The obtained poly(cyclohexyl methacrylate) had Mw = 25,500 and Mw/Mn =1.11.

### [Experimental Example 25]

### (Polymerization of cyclohexyl methacrylate)

Under nitrogen, triphenylmethyltetrakis(pentafluorophenyl)borate (46.1 mg, 0.05 mmol) and titanium complex (b) (22.3 mg, 0.05 mmol) were stirred at room temperature in toluene (9 mL) for 10 minutes. To this mixture, cyclohexyl methacrylate (1.69 g, 10.04 mmol) was added at one time to initiate polymerization. Polymerization was performed at room temperature for 6 hours and a methanol solution with hydrochloric acid (5 wt%) (4.6 mL) was added to terminate polymerization. After methanol (137 mL) was added and stirred for one hour, a polymer was obtained by filtration. The obtained polymer was subjected to vacuum dry (80°C, 3 hours) to obtain a poly(cyclohexyl methacrylate) (1.36 g, yield 80.7%) as light yellow solids. The obtained poly(cyclohexyl methacrylate) had Mw = 28,900 and Mw/Mn = 1.16.

### Industrial Applicability

The transition metal ion complex obtained by the present invention is useful, for example, as a catalyst for polymerization reaction of an olefin. Furthermore, a (meth)acrylate polymer can be produced by using the transition metal complex of the present invention as a catalyst.

## Claims

1. A transition metal ion complex represented by formula (1): 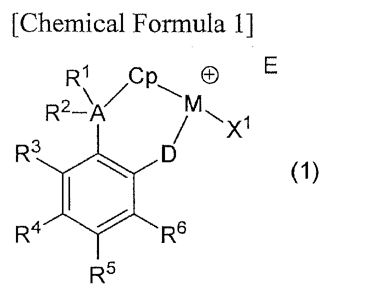 [in formula (1), M represents a group-IV element of the periodic table, A represents a group-XIV element of the periodic table, D represents a group-XVI element of the periodic table, Cp represents a group having a cyclopentadienyl type anion skeleton, E represents a counter anion, R¹, R², R³, R⁴, R⁵ and R⁶ are the same or different and represent a hydrogen atom, a halogen atom, an alkyl group having 1 to 20 carbon atoms, an aryl group having 6 to 20 carbon atoms, an aralkyl group having 7 to 20 carbon atoms, a silyl group substituted with a hydrocarbon having 1 to 20 carbon atoms, an alkoxy group having 1 to 20 carbon atoms, an aryloxy group having 6 to 20 carbon atoms, an aralkyloxy group having 7 to 20 carbon atoms or an amino group substituted with a hydrocarbon having 1 to 20 carbon atoms, where in R¹, R², R³, R⁴, R⁵ and R⁶, the alkyl group, aryl group, aralkyl group, alkoxy group, aryloxy group, aralkyloxy group or hydrocarbon may be substituted with a halogen atom, R¹ and R² may join to form a ring, R³ and R⁴, R⁴ and R⁵, and R⁵ and R⁶ each optionally join to form a ring, X¹ represents an alkyl group having 1 to 20 carbon atoms, an aryl group having 6 to 20 carbon atoms or an aralkyl group having 7 to 20 carbon atoms where in X¹,the alkyl group, aryl group or aralkyl group may be substituted with a halogen atom].

2. The transition metal ion complex according to Claim 1, wherein D is an oxygen atom.

3. The transition metal ion complex according to Claim 1 or 2, wherein M is a titanium atom.

4. The transition metal ion complex according to any one of Claims 1 to 3, wherein X¹ is an alkyl group.

5. The transition metal ion complex according to any one of Claims 1 to 4, wherein E is a boron compound.

6. The transition metal ion complex according to any one of Claims 1 to 5, wherein E is tris(pentafluorophenyl)methyl borate or tetrakis(pentafluorophenyl) borate.

7. The transition metal ion complex according to any one of Claims 1 to 6, wherein Cp is a substituted or unsubstituted cyclopentadienyl group.

8. A method for producing a transition metal ion complex, comprising:
contacting a transition metal complex represented by formula (2): 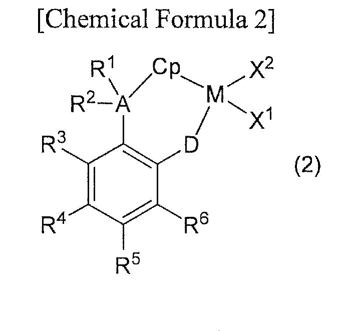 [in formula (2), M represents a group-IV element of the periodic table, A represents a group-XIV element of the periodic table, D represents a group-XVI element of the periodic table, Cp represents a group having a cyclopentadienyl type anion skeleton , R¹, R², R³, R⁴, R⁵ and R⁶ are the same or different and represent a hydrogen atom, a halogen atom, an alkyl group having 1 to 20 carbon atoms, an aryl group having 6 to 20 carbon atoms, an aralkyl group having 7 to 20 carbon atoms, a silyl group substituted with a hydrocarbon group having 1 to 20 carbon atoms, an alkoxy group having 1 to 20 carbon atoms, an aryloxy group having 6 to 20 carbon atoms, an aralkyloxy group having 7 to 20 carbon atoms or an amino group substituted with a hydrocarbon group having 1 to 20 carbon atoms, where in R¹, R², R³, R⁴, R⁵ and R⁶, the alkyl group, aryl group, aralkyl group, alkoxy group, aryloxy group, aralkyloxy group or hydrocarbon group may be substituted with a halogen atom, R¹ and R² may join to form a ring, R³ and R⁴, R⁴ and R⁵, and R⁵ and R⁶ each optionally join to form a ring, X¹ and X² represent an alkyl group having 1 to 20 carbon atoms, an aryl group having 6 to 20 carbon atoms and an aralkyl group having 7 to 20 carbon atoms where in X¹ and X², the alkyl group, aryl group or aralkyl group may be each substituted with a halogen atom],
with at least one boron compound selected from the group consisting of the compounds represented by formulas (B1), (B2) and (B3):
BQ¹Q²Q³ (B1)
G⁺(BQ¹Q²Q³Q⁴)⁻ (B2)
(L¹-H)⁺(BQ¹Q²Q³Q⁴)⁻ (B3)
[in formulas (B1), (B2) and (B3), B represents a boron atom having a trivalent atomic value, Q¹, Q², Q³ and Q⁴ each independently represent a halogen atom, a hydrocarbon group, a halogenated hydrocarbon group, a substituted silyl group, an alkoxy group or a disubstituted amino group, G⁺ represents an inorganic or organic cation and L¹ represents a neutral Lewis base].

9. A method for producing an olefin polymer, comprising:
polymerizing an olefin in the presence of the transition metal ion complex according to any one of Claims 1 to 7.

10. A method for producing a (meth)acrylate polymer, comprising:
polymerizing a (meth)acrylate in the presence of the transition metal ion complex according to any one of Claims 1 to 7.
